# FASCICULE DE BREVET EUROPEEN

(11) **EP 3 432 084 B1**
(45) Date de publication et mention de la délivrance du brevet: **16.09.2020**
(21) Numéro de dépôt: 17182433.7
(22) Date de dépôt: 20.07.2017
(51) Int. Cl.: G04B 37/02, G04B 37/10

(54) **SOUPAPE DE SÉCURITÉ POUR MONTRE**
SICHERHEITSVENTIL FÜR ARMBANDUHR
SAFETY VALVE FOR A WATCH

(43) Date de publication de la demande: 23.01.2019
(73) Titulaire: Omega SA, 2502 Bienne (CH)
(72) Inventeur: PODVIN, Pierre, 1110 Morges (CH)
(74) Mandataire: ICB SA

(56) Documents cités:
- EP-A1- 0 718 211
- EP-A1- 1 610 192
- FR-A1- 2 045 830

## Description

### Domaine technique

La présente invention se rapporte à une soupape de sécurité pour une pièce d'horlogerie notamment une montre bracelet et plus précisément pour une montre bracelet destinée à la plongée sous-marine. La présente invention se rapporte également à la pièce d'horlogerie munie de ladite soupape.

### Arrière-plan technologique

Les soupapes à hélium, aussi appelées valves à hélium, sont présentes sur certaines montres de plongée pour évacuer l'hélium infiltré dans la boîte de montre lors de plongées dites à saturation où les plongeurs respirent un mélange gazeux contenant de l'hélium et de l'oxygène. Cela leur permet de rester plusieurs jours à l'intérieur d'une cloche ou d'une station sous-marine. Durant ce laps de temps, l'hélium peut s'infiltrer dans la montre. En l'absence d'une telle soupape, la surpression intérieure générée par l'hélium infiltré peut lors de la phase de décompression générer des dégâts à la montre, comme par exemple la perte du verre qui se déchasse ou se brise.

Il existe des soupapes à hélium manuelles et automatiques. Les soupapes manuelles fonctionnent simplement en serrant un élément d'étanchéité comme une tête, à la façon d'une couronne vissée, sur la carrure. Les soupapes manuelles ont pour désavantage que la montre n'est pas étanche si la soupape n'est pas resserrée. Les soupapes automatiques se déclenchent automatiquement, comme leur nom l'indique, lorsque la différence de pression entre l'intérieur de la boîte de montre et l'environnement extérieur atteint un seuil critique.

Un premier type de soupape automatique est celle sans blocage possible par l'utilisateur dont les fondements sont décrits dans le document CH 492 246. Celle-ci montée dans la majorité des cas à fleur de la carrure se présente sous forme d'une simple soupape limitant la pression à l'intérieur du boîtier de montre.

L'inconvénient de ce type de soupape est son ouverture automatique sans possibilité de bloquer l'échappement de gaz et donc aussi l'entrée de fluide dans la montre, ce qui est problématique lorsque la décompression s'effectue en milieu humide.

On connait également du document EP1610192 une garniture étanche pour montre.

### Résumé de l'invention

Un but de la présente invention est par conséquent de proposer une soupape automatique garantissant une bonne évacuation des gaz pouvant provoquer une surpression à l'intérieur de la boite de montre tout en demeurant parfaitement étanche quelles que soient les conditions dans lesquelles la décompression s'effectue.

A cet effet, la présente invention propose une soupape de sécurité automatique pour pièce d'horlogerie, notamment pour une montre de plongée, la soupape comportant une tête de soupape logée dans un tube destiné à être fixé dans un boitier de la pièce d'horlogerie, la tête de soupape comprenant un canal d'évacuation agencé pour pouvoir être en communication fluidique avec l'intérieur du boitier via un passage prévu dans ledit tube lorsque la pression régnant à l'intérieur du boitier excède la pression régnant à l"extérieur du boitier afin d'évacuer un excès de fluide, ladite tête de soupape comprenant un noyau central monté fixe dans ledit canal d'évacuation, un joint à lèvre comportant une région de base et une lèvre annulaire, le joint à lèvre étant disposé autour dudit noyau et agencé pour que la lèvre soit en appui sous tension contre une zone d'une paroi du canal d'évacuation de manière d'une part à pouvoir se dégager de ladite zone pour permettre une compensation de la pression entre l'intérieur du boitier et l'extérieur du boitier dans le cas d'une surpression à l'intérieur du boitier et d'autre part à être appliqué contre ladite zone pour assurer l'étanchéité de l'intérieur du boitier par rapport à l'extérieur dans le cas d'une surpression régnant à l'extérieur du boitier, la soupape de sécurité comportant en outre un élément d'étanchéité supplémentaire agencé à l'intérieur du canal d'évacuation entre le joint à lèvre et l'intérieur du boitier, ledit élément d'étanchéité supplémentaire comportant une membrane agencée pour être perméable aux gaz et établir une communication fluidique depuis l'intérieur du boitier vers l'extérieur lorsque ladite pression interne excède une valeur prédéterminée et imperméable aux liquides circulant depuis l'extérieur du boitier vers l'intérieur du boitier

Grâce à ces caractéristiques on obtient une soupape de sécurité assurant une étanchéité efficace quelles que soient les conditions d'utilisation de celle-ci. Par ailleurs l'absence de pièces mobiles dans la soupape permet d'obtenir une soupape de fonctionnement fiable qui est par ailleurs économique à fabriquer et facile à assembler.

D'autres avantages ressortiront des caractéristiques exprimées dans les revendications, de la description détaillée de l'invention illustrée ci-après à l'aide des dessins annexés donnés à titre d'exemples nullement limitatifs.

### Brève description des figures

La figure 1 est une vue coupe d'une soupape de sécurité automatique selon l'invention vissée sur la carrure d'une boite de montre.
La figure 2 est une vue en coupe similaire à la figure 1 dans une configuration dans laquelle la soupape est soumise à une basse pression extérieure qui est supérieure à la pression régnant à l'intérieure de la boite de montre et dans laquelle la progression du fluide dans la soupape est schématisée ;
La figure 3 est une vue en coupe similaire à la figure 1 dans une configuration dans laquelle la soupape est soumise à une haute pression extérieure qui est supérieure à la pression régnant à l'intérieure de la boite de montre et dans laquelle la progression du fluide dans la soupape est schématisée;
- La figure 4 est une vue en coupe similaire à la figure 1 dans une configuration dans laquelle la pression régnant à l'intérieur de la boite est supérieure à la pression régnant à l'extérieur de la boite de montre et dans laquelle la progression du fluide dans la soupape est schématisée.

### Description détaillée de l'invention

La présente invention se rapporte à une soupape à hélium, qu'on qualifiera aussi de soupape de sécurité pour une pièce d'horlogerie et notamment pour une montre de plongée. Cette soupape est désignée par la référence générale 1 aux dessins.

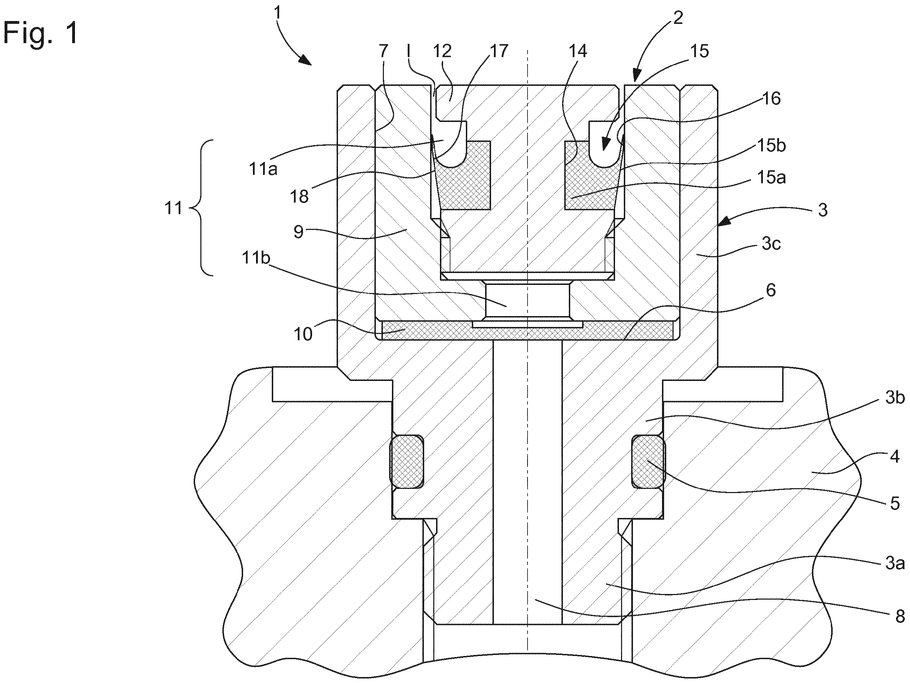

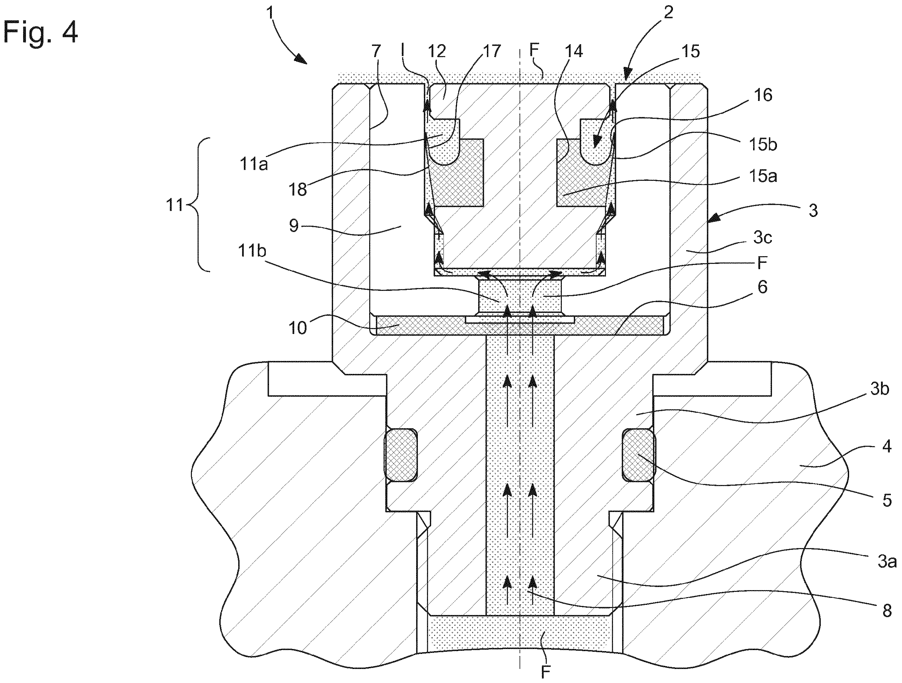

La soupape de sécurité automatique 1 représentée aux figures 1 à 4 comporte une tête de soupape 2 et un tube 3 solidaire de la tête de la soupape 2. Le tube 3 est vissé par sa partie inférieure 3a dans une carrure 4 d'un boitier partiellement représentée. Le tube présente dans sa partie médiane un renflement 3b muni d'une gorge dans laquelle est logé un joint torique 5 assurant son étanchéité au niveau de la carrure 4. Dans l'exemple illustré, le tube 3 est terminé par une portion supérieure émergeante 3c de la carrure 4. Le tube 3 comporte une portée intérieure 6 délimitant un premier espace supérieur 7 dans lequel est logée la tête de soupape 2 et un deuxième espace inférieur définissant un passage 8 relié à l'intérieur du boitier.

Il va de soi que selon une variante de réalisation le tube 3 peut être noyé dans la carrure 4.

La tête de soupape présente un corps 9 de forme générale cylindrique chassé dans l'espace supérieur 7 du tube 3 et pince une membrane 10 contre la portée intérieure 6.

La tête de soupape comporte un canal d'évacuation 11 central ménagé dans le corps 9 et agencé pour pouvoir être en communication fluidique avec l'intérieur du boitier de montre via la membrane 10 et le passage 8 du tube 3 lorsque la pression régnant à l'intérieur du boitier excède la pression régnant à l"extérieur du boitier afin d'évacuer un excès de fluide.

Pour ce faire, la membrane 10 est agencée pour être perméable aux gaz et établir une communication fluidique depuis l'intérieur du boitier vers l'extérieur lorsque la pression à l'intérieur du boitier excède une valeur prédéterminée et imperméable aux liquides circulant depuis l'extérieur du boitier vers l'intérieur du boitier.

Le canal d'évacuation 11 comprend une première section 11a débouchant vers l'extérieur du boitier et une deuxième section 11b de plus petit diamètre disposée en regard du passage 8. Un noyau central 12 est vissé dans la première section 11a du canal d'évacuation 11 via un filetage 13 ménagée dans la partie inférieure de la première section 11a, c'est-à-dire dans la partie dirigée vers l'intérieur du boitier.

Le noyau central 12 présente une forme générale cylindrique et comprend dans sa partie médiane un dégagement périphérique dans le fond duquel est ménagée une gorge 14 recevant un joint à lèvre 15 qui comporte une région de base 15a et une lèvre d'étanchéité 15b annulaires. La lèvre d'étanchéité 15b est en appui avec une tension contre une zone 16 de la paroi interne de la première section 11a du canal d'évacuation 11 pour assurer l'étanchéité de l'intérieur du boitier par rapport à l'extérieur dans le cas d'une surpression régnant à l'extérieur du boitier. D'autre part la lèvre d'étanchéité 15b est configurée pour fléchir dans une direction essentiellement perpendiculaire pour se dégager de la zone 16 pour permettre une compensation de la pression entre l'intérieur du boitier et l'extérieur du boitier dans le cas d'une surpression à l'intérieur du boitier par l'évacuation du fluide hors de la soupape.

La membrane 10 qui est agencée à l'intérieur du canal d'évacuation 11 entre le joint à lèvre 15 et l'intérieur du boitier forme donc un élément d'étanchéité supplémentaire. La membrane est composée d'un film en polymère imperméable à l'eau et perméable aux gaz. Typiquement le film polymère est porté par un substrat poreux aux gaz. Avantageusement cette membrane peut être une membrane vendue par la société Gore sous le référence « Acoustic vent GAW331 ».

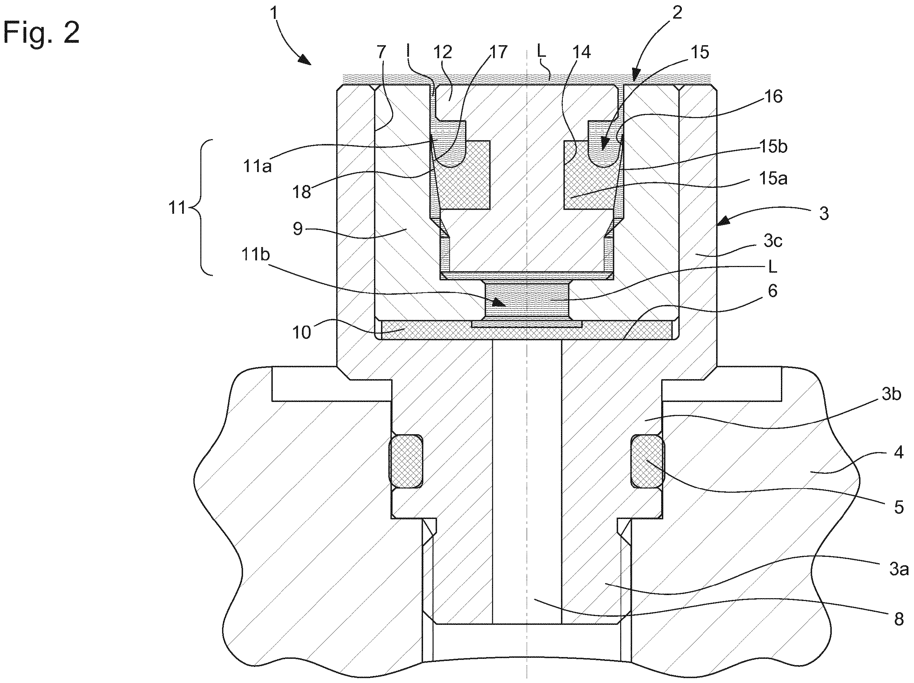

Les figures 2 à 4 illustrent le fonctionnement de la soupape automatique selon l'invention.

Lorsque la soupape est plongée dans un milieu liquide et est soumise à une basse pression, il existe un risque que du liquide L puisse s'introduire dans l'interstice I entre la paroi extérieure du noyau 12 et interne de la première section 11a du canal d'évacuation 11. La pression du liquide exercée sur la surface supérieure 17 de la lèvre étant faible dans ces conditions on ne peut exclure qu'une partie du liquide s'infiltre entre la lèvre et sa zone d'appui 16 et poursuive à travers la partie filetée de la première section 11a du canal d'évacuation pour atteindre la deuxième section 1b de ce dernier. Grâce à la présence de l'élément d'étanchéité supplémentaire formée par la membrane 10, le liquide est stoppé et l'étanchéité du boitier reste assurée (Figure 2).

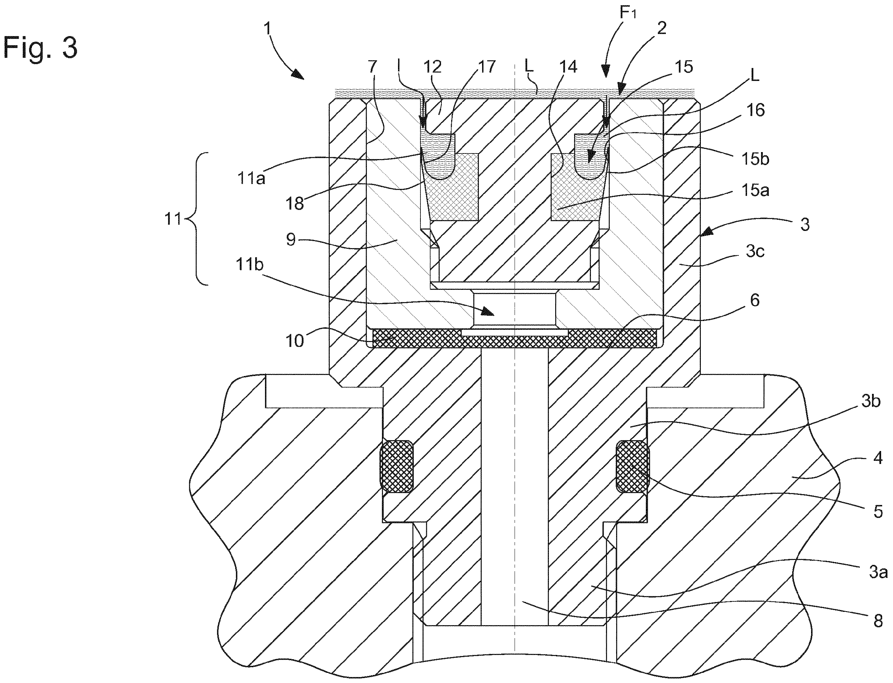

Lorsque la soupape est plongée dans un milieu liquide et est soumise à une haute pression, le risque que du liquide L puisse s'introduire dans l'interstice entre la paroi extérieure du noyau 12 et interne de la première section 11a du canal d'évacuation 11 existe mais la pression du liquide L exercée sur la lèvre 15 est importante et plaque cette dernière fermement contre la zone d'appui 16 de sorte que l'étanchéité du boitier est assurée de manière fiable par le joint 15 (Figure 3).

En présence d'une surpression à l'intérieur du boitier, le fluide F, en l'occurrence l'hélium gazeux vient en contact avec la membrane 10 qui est perméable aux gaz ce qui permet au fluide F de la traverser de circuler dans la deuxième section 11b du canal d'évacuation 11 et de traverser la partie filetée de la première section 11a. Dès lors le fluide F presse contre la face inférieure 18 de la lèvre 15b et écarte celle-ci de la zone d'appui 16, par là même, permettant l'échappement du fluide via l'interstice entre la paroi extérieure du noyau 12 et interne de la première section 11a du canal d'évacuation 11. Le fluide en surpression à l'intérieur du boitier peut ainsi s'échapper du boitier pour équilibrer les pressions en l'intérieur et l'extérieur du boitier sans compromettre l'étanchéité du boitier.

On notera en outre que selon une variante de réalisation non représentée, le tube 3 peut être surmonté d'une coiffe vissée sur la partie émergeante du tube 3, cette coiffe pouvant agir comme dispositif d'activation ou d'inactivation de la soupape.

## Revendications

1. Soupape (1) de sécurité automatique pour pièce d'horlogerie, notamment pour une montre de plongée, la soupape comportant une tête de soupape (2) logée dans un tube (3) destiné à être fixé dans un boitier (4) de la pièce d'horlogerie, la tête de soupape comprenant un canal d'évacuation (11) agencé pour pouvoir être en communication fluidique avec l'intérieur du boitier via un passage prévu dans ledit tube (3) lorsque la pression régnant à l'intérieur du boitier excède la pression régnant à l"extérieur du boitier afin d'évacuer un excès de fluide, ladite tête de soupape comprenant un noyau central (12) monté fixe dans ledit canal d'évacuation, un joint à lèvre (15) comportant une région de base (15a) et une lèvre (15b) annulaires, le joint à lèvre étant disposé autour dudit noyau et agencé pour que la lèvre soit en appui sous tension contre une zone (16) d'une paroi du canal d'évacuation (11) de manière d'une part à pouvoir se dégager de ladite zone pour permettre une compensation de la pression entre l'intérieur du boitier et l'extérieur du boitier dans le cas d'une surpression à l'intérieur du boitier et d'autre part à être appliqué contre ladite zone (16) pour assurer l'étanchéité de l'intérieur du boitier par rapport à l'extérieur dans le cas d'une surpression régnant à l'extérieur du boitier, la soupape de sécurité comportant en outre un élément d'étanchéité supplémentaire agencé à l'intérieur du canal d'évacuation entre le joint à lèvre (15) et l'intérieur du boitier, ledit élément d'étanchéité supplémentaire comportant une membrane (10) agencée pour être perméable aux gaz et établir une communication fluidique depuis l'intérieur du boitier vers l'extérieur lorsque ladite pression interne excède une valeur prédéterminée et imperméable aux liquides circulant depuis l'extérieur du boitier vers l'intérieur du boitier.

2. Soupape selon la revendication 1, **caractérisée en ce que** le tube (3) présente une portée intérieure (6) et **en ce que** ladite membrane (10) est pincée entre la tête de soupape (2) et ladite portée (6).

3. Soupape selon la revendication 1 ou 2, **caractérisée en ce que** la membrane (10) est composée d'un film en polymère imperméable à l'eau et perméable aux gaz.

4. Soupape selon la revendication 3, **caractérisée en ce que** le film 5 en polymère est porté par un substrat poreux.

5. Soupape selon l'une quelconque des revendications 1 à 4, **caractérisée en ce que** le canal d'évacuation (11) comprend une première section (11a) débouchant vers l'extérieur du boitier prolongée par une deuxième section (11b) de plus petit diamètre que la première section disposée en regard du passage 10 du tube.

6. Soupape selon l'une quelconque des revendications 1 à 5 **caractérisée en ce que** une partie inférieure de la première section (11a) du canal d'évacuation comprend un filetage et **en ce que** le noyau (12) est vissé sur ledit filetage.

7. Soupape selon l'une quelconque des revendications 1 à 6 **caractérisée en ce que** le noyau (12) présente une forme générale cylindrique comprenant dans sa partie médiane une gorge (14) recevant la base (15a) dudit joint à lèvre (15).

8. Soupape selon l'une quelconque des revendications 1 à 7, 20 **caractérisée en ce que** la tête de soupape est chassée dans le tube (3).

9. Soupape selon l'une quelconque des revendications précédentes **caractérisée en ce que** le tube (3) est agencé pour être vissé sur le boitier (4).

10. Pièce d'horlogerie comprenant une soupape selon l'une quelconque des revendications 1 à 9.

## Patentansprüche

1. Automatisches Sicherheitsventil (1) für eine Uhr, insbesondere für eine Taucheruhr, wobei das Ventil einen Ventilkopf (2) aufweist, der in einem Rohr (3) aufgenommen ist, das dazu bestimmt ist, in einem Gehäuse (4) der Uhr befestigt zu werden, wobei der Ventilkopf einen Entleerungskanal (11) umfasst, der dazu vorgesehen ist, mit dem Innenraum des Gehäuses durch einen in dem Rohr (3) vorgesehenen Durchlass in Fluidverbindung zu stehen, wenn der im Innenraum des Gehäuses herrschende Druck den außerhalb des Gehäuses herrschenden Druck überschreitet, um überschüssiges Fluid abzuführen, wobei der Ventilkopf einen zentralen Kern (12), der in dem Entleerungskanal fest montiert ist, und eine Lippendichtung (15) umfasst, die einen ringförmigen Basisbereich (15a) und eine ringförmige Lippe (15b) aufweist, wobei die Lippendichtung um den Kern angeordnet ist und so angeordnet ist, dass sie sich an einem Bereich (16) einer Wand des Entleerungskanals (11) unter Spannung abstützt, derart, dass sie sich einerseits aus dem Eingriff des Bereichs lösen kann, um einen Druckausgleich zwischen dem Inneren des Gehäuses und dem Äußeren des Gehäuses im Fall eines Überdrucks im Inneren des Gehäuses zu ermöglichen, und andererseits gegen den Bereich (16) angedrückt wird, um die Dichtigkeit im Inneren des Gehäuses in Bezug auf das Äußere im Fall eines außerhalb des Gehäuses herrschenden Überdrucks sicherzustellen, wobei das Sicherheitsventil ferner ein zusätzliches Dichtungselement umfasst, das im Inneren des Entleerungskanals zwischen der Lippendichtung (15) und dem Inneren des Gehäuses angeordnet ist, wobei das zusätzliche Dichtungselement eine Membran (10) aufweist, die so beschaffen ist, dass sie gasdurchlässig ist und eine Fluidverbindung vom Inneren des Gehäuses zum Äußeren herstellt, wenn der Innendruck einen vorbestimmten Wert überschreitet, und für Flüssigkeiten undurchlässig ist, die von außerhalb des Gehäuses ins Innere des Gehäuses strömen.

2. Ventil nach Anspruch 1, **dadurch gekennzeichnet, dass** das Rohr (3) eine innere Auflagefläche (6) aufweist und dass die Membran (10) zwischen den Ventilkopf (2) und der Auflagefläche (6) eingeklemmt ist.

3. Ventil nach Anspruch 1 oder 2, **dadurch gekennzeichnet, dass** die Membran (10) aus einem wasserundurchlässigen und gasdurchlässigen Polymerfilm gebildet ist.

4. Ventil nach Anspruch 3, **dadurch gekennzeichnet, dass** der Polymerfilm durch ein poröses Substrat getragen wird.

5. Ventil nach einem der Ansprüche 1 bis 4, **dadurch gekennzeichnet, dass** der Entleerungskanal (11) einen ersten Abschnitt (11a) aufweist, der in die äußere Umgebung des Gehäuses mündet und durch einen zweiten Abschnitt (11b) verlängert ist, dessen Durchmesser kleiner als jener des dem Durchlass des Rohrs zugewandten ersten Abschnitts ist.

6. Ventil nach einem der Ansprüche 1 bis 5, **dadurch gekennzeichnet, dass** ein unterer Teil des ersten Abschnitts (11a) des Entleerungskanals ein Gewinde aufweist und dass der Kern (12) auf das Gewinde geschraubt ist.

7. Ventil nach einem der Ansprüche 1 bis 6, **dadurch gekennzeichnet, dass** der Kern (12) eine allgemein zylindrische Form aufweist, die in ihrem mittleren Teil eine Nut (14) aufweist, die die Basis (15a) der Lippendichtung (15) aufnimmt.

8. Ventil nach einem der Ansprüche 1 bis 7, **dadurch gekennzeichnet, dass** das Ventil in das Rohr (3) eingebracht ist.

9. Ventil nach einem der vorhergehenden Ansprüche, **dadurch gekennzeichnet, dass** das Rohr (3) dazu vorgesehen ist, auf das Gehäuse (4) geschraubt zu werden.

10. Uhr, umfassend ein Ventil nach einem der Ansprüche 1 bis 9.

## Claims

1. Automatic safety valve (1) for timepieces, particularly for dive watches, the valve including a valve head (2) housed inside a tube (3) intended to be fixed inside a case (4) of the timepiece, the valve head including an outlet channel (11) arranged to be capable of fluid communication with the inside of the case via a passage provided in said tube (3), when the pressure inside the case exceeds the pressure outside the case in order to evacuate excess fluid, said valve head including a central core (12) fixedly mounted inside said outlet channel, a lip seal (15) having an annular base region (15a) and lip (15b), the lip seal being disposed around said core and arranged so that the lip is pressed against an area (16) of a wall of the outlet channel (11), in order, on one hand, to be able to disengage from said area to allow pressure compensation between the interior of the case and the exterior of the case in the event of excess pressure inside the case, and on the other hand, pressed against said area (16) to ensure the sealing of the interior of the case with respect to the exterior in the event of excess pressure outside the case, the safety valve further including an additional sealing element arranged inside the outlet channel between the lip seal (15) and the interior of the case, said additional sealing element including a membrane (10) arranged to be permeable to gases and to establish fluid communication from the interior of the case towards the exterior, when said internal pressure exceeds a predetermined value, and impermeable to liquids flowing from outside the case towards the interior of the case.

2. Valve according to claim 1 or 2, **characterized in that** the tube (3) has an inner shoulder (6) and **in that** said membrane (10) is clamped between the valve head (2) and said shoulder (6).

3. Valve according to claim 1 or 2, **characterized in that** the membrane (10) is composed of a polymer film that is impermeable to water and permeable to gases.

4. Valve according to claim 3, **characterized in that** the polymer film is carried by a porous substrate.

5. Valve according to any of claims 1 to 4, **characterized in that** the outlet channel (11) includes a first section (11a) opening outside the case extended by a second section (11b) of smaller diameter than the first section arranged facing the passage in the tube.

6. Valve according to any of claims 1 to 5, **characterized in that** a lower part of the first section (11a) of the outlet channel includes a thread and **in that** the core (12) is screwed onto said thread.

7. Valve according to any of claims 1 to 6, **characterized in that** the core (12) has a generally cylindrical shape including, in its median part, a groove (14) receiving the base (15a) of said lip seal (15).

8. Valve according to any of claims 1 to 7, **characterized in that** the valve head is driven into the tube (3).

9. Valve according to any of the preceding claims, **characterized in that** the tube (3) is screwed onto the case (4).

10. Timepiece comprising a valve according to any of claims 1 to 9.
